# EUROPÄISCHE PATENTSCHRIFT

(11) **EP 0 868 823 B1**
(45) Veröffentlichungstag und Bekanntmachung des Hinweises auf die Patenterteilung: **18.04.2001**
(21) Anmeldenummer: 96946167.2
(22) Anmeldetag: 02.12.1996
(51) Int. Cl.: H04Q 7/24

(54) **VERFAHREN ZUR ÜBERTRAGUNG IN EINEM UNIVERSELLEN ÜBERTRAGUNGSNETZ**
PROCESS FOR TRANSMITTING DATA IN A UNIVERSAL TRANSMISSION SYSTEM
PROCEDE DE TRANSMISSION D'INFORMATIONS DANS UN RESEAU UNIVERSEL DE TRANSMISSION

(30) Priorität: 19.12.1995 DE 19547467
(43) Veröffentlichungstag der Anmeldung: 07.10.1998
(73) Patentinhaber: SIEMENS AKTIENGESELLSCHAFT, 80333 München (DE)
(72) Erfinder: HAFERBECK, Ralf, D-85716 Unterschleissheim (DE); ERNST, Detlef, D-82041 Oberhaching (DE)
(86) Internationale Anmeldenummer: DE9602305
(87) Internationale Veröffentlichungsnummer: WO9723098

(56) Entgegenhaltungen:
- EP-A- 0 577 960
- EP-A- 0 679 042
- WO-A-94/01975
- PROCEEDINGS OF THE GLOBAL TELECOMMUNICATIONS CONFERENCE (GLOBECOM), SAN FRANCISCO, NOV. 28 - DEC. 2, 1994, Bd. 3 OF 3, 28.November 1994, INSTITUTE OF ELECTRICAL AND ELECTRONICS ENGINEERS, Seiten 1691-1695, XP000488814 HAUWERMEIREN VAN L ET AL: "REQUIREMENTS FOR MOBILITY SUPPORT IN ATM"
- IEEE JOURNAL ON SELECTED AREAS IN COMMUNICATIONS, Bd. 12, Nr. 5, 1.Juni 1994, Seiten 900-908, XP000464975 MCTIFFIN M J ET AL: "MOBILE ACCESS TO AN ATM NETWORK USING A CDMA AIR INTERFACE"

## Beschreibung

Die Erfindung betrifft ein Verfahren zur Übertragung von Informationen in einem universellen Übertragungsnetz, in dem mobilfunkspezifische und festnetzspezifische Funktionen durchgeführt werden, gemäß dem Oberbegriff des Patentanspruchs 1.

Aus dem Aufsatz "Mobilkommunikation auf Expansionskurs", in telcom report 18 (1995), Heft 2, Seiten 52 bis 55, sind universelle Übertragungsnetze (UMTS Universal Mobile Telecommunications System, FPLMTS Future Public Land Mobile Telecommunications System) bekannt, in denen unterschiedliche Netze und Netzdienste zur personenbezogenen mobilen Telekommunikation zusammengefaßt sind. Für die Netzteilnehmer - ob Mobilfunkteilnehmer oder Festnetzteilnehmer - entsteht dadurch ein universeller Zugang zu einem Übertragungsnetz, in dem zur Sprach-, Daten- und Bildkommunikation mobilfunknetzbezogene und festnetzbezogene Funktionen durchgeführt werden.

Bekanntlich können von der Funkteilnehmerstation eines Netzteilnehmers dieselben Informationen auf mehreren redundanten Übertragungspfaden, die über eine Funkübertragungsschnittstelle vom Netz zur Funkteilnehmerstation oder von der Funkteilnehmerstation zum Übertragungsnetz parallel aufgebaut sind, ausgesendet werden (Macro Diversity), um eine möglichst gute Übertragungsqualität zu erreichen. Dies bedeutet, daß die Signalisierungs- und/oder Nutzinformationen, die üblicherweise in einen oder mehrere Übertragungsrahmen eingefügt werden, von mehreren Funkeinrichtungen - beispielsweise Basis-Sende /Empfangsstationen des Übertragungsnetzes empfangen werden. Die Informationsübertragung über parallele redundante Übertragungspfade wird beispielsweise bei einer Funkübertragungsschnittstelle angewendet, die das CDMA-Zugriffsverfahren (Code Division Multiple Access) gemäß der US-Patentschrift 5,101,501 benutzt. Die redundanten Übertragungspfade können dynamisch aufgebaut und abgebaut werden, während die Funkteilnehmerstation ihren Aufenthaltsort wechselt. Auch bei ortsfester Funkteilnehmerstation ist ein Betrieb in diesem Übertragungsmodus (Macro Diversity) über einen längeren Zeitraum möglich.

Aus der EP-A-0 679 042 ist bekannt, in einem ATM-Netzwerk mit einer Nutzung einer Funkschnittstelle zur Übertragung von Informationen von bzw. zu einer Mobilstation, durch einen Aufbau von redundanten Pfaden durch die Mobilstation eine verbesserte Übertragungsqualität zu erhalten. Die dadurch benötigte höhere Übertragungskapazität für die Übertragung von ATM-Zellen in dem Zugangsnetzwerk (Access-Networks) zwischen Basisstationen, mit denen die Mobilstation in Funkverbindung steht, und einer Mobilnetzschnittstelleneinheit (Mobile Network Interface Unit) wird dadurch verringert, daß Unternetzwerke (Sub-Networks) in dem Zugangsnetzwerk gebildet werden und in deren Schnittstellen (Sub Network Interfaces) redundante Pfade kombiniert bzw. aufgeteilt werden.

Die Informationen, die von der Funkteilnehmerstation in den Übertragungsrahmen auf verschiedenen Übertragungspfaden ausgesendet werden, können im Übertragungsnetz an Kombinationspunkten zusammengeführt werden, an denen in der einen Übertragungsrichtung (uplink) jeweils zwei Übertragungspfade zu einem einzelnen Übertragungspfad kombiniert und in der anderen Übertragungsrichtung (downlink) der einzelne Übertragungspfad in zwei Übertragungspfade aufgeteilt werden. Die Anzahl und Verteilung der Kombinationspunkte auf Netzelemente des Übertragungsnetzes ändert sich dynamisch mit dem Hinzufügen bzw. Entfernen von redundanten Übertragungspfaden, die von der Funkteilnehmerstation zusätzlich aufgebaut bzw. wieder abgebaut werden können.

Für eine bestmögliche Nutzung der Netzelemente des universellen Übertragungsnetzes ist es erforderlich, einen Übergangspunkt festzulegen, an dem mobilfunkspezifisch kodierte Informationen in festnetzspezifisch kodierte Informationen umgesetzt werden müssen. Da der Übergangspunkt alle mobilfunkspezifischen Funktionen abschließt, kann bei Vorhandensein mehrerer redundanter Übertragungspfade im Übertragungsnetz eine Umsetzung erst nach allen Kombinationspunkten erfolgen. Durch das dynamische Hinzufügen und Entfernen von redundanten Übertragungspfaden ergeben sich Änderungen bei der Anzahl und Verteilung der Kombinationspunkte und somit bei der Festlegung des Übergangspunkts im Übertragungsnetz.

Daher ist es Aufgabe der vorliegenden Erfindung, ein Verfahren anzugeben, durch das bei dynamischem Aufbau bzw. Abbau von redundanten Übertragungspfaden (Macro Diversity) der Übergangspunkt im Übertragungsnetz flexibel festgelegt werden kann.

Diese Aufgabe wird gemäß der Erfindung durch die Merkmale des Patentanspruchs 1 gelöst. Weiterbildungen der Erfindung sind in den Unteransprüchen angegeben.

Von einer zentralen Steuereinrichtung des Übertragungsnetzes, die über alle Kombinationspunkte informiert ist, wird ein Kombinationspunkt, an dem die beiden letzten Übertragungspfade kombiniert werden, als einziger Übergangspunkt im Übertragungsnetz gewählt, an dem in dem Übertragungsrahmen enthaltene mobilfunknetzspezifisch kodierte Informationen in festnetzspezifisch kodierte Informationen umgesetzt werden. Damit kann der Übergangspunkt zur Umsetzung der mobilfunknetzspezifisch kodierten Informationen in festnetzspezifisch kodierte Informationen dort dynamisch lokalisiert und flexibel festgelegt werden, wo ein Kombinationspunkt die letzten beiden Übertragungspfade kombiniert oder den einzelnen Übertragungspfad aufteilt. Durch das erfindungsgemäße Verfahren ist bei dynamischem Aufbau und Abbau redundanter Übertragungspfade auf der Funkübertragungsschnittstelle gewährleistet, daß der Übergangspunkt sich in einem Netzelement einer Netzebene befindet, die möglichst nahe zur Funkteilnehmerstation liegt.

Gemäß einer Weiterbildung der Erfindung wird bei Änderung des Übergangspunkts, bedingt durch einen Aufbau eines zusätzlichen Übertragungspfades oder durch einen Abbau eines bestehenden Übertragungspfades, der Kombinationspunkt, der zu dem neuen Übergangspunkt wird, von der zentralen Steuereinrichtung in einer Signalisierungsnachricht aufgefordert, die Umsetzung durchzuführen.

Gemäß einer anderen Weiterbildung der Erfindung wird der Kombinationspunkt, der die Umsetzung bisher durchgeführt hat, von der zentralen Steuereinrichtung in einer Signalisierungsnachricht aufgefordert, die Umsetzung zu unterlassen.

Zur Festlegung des neuen Übergangspunkts durch die zentrale Steuereinrichtung, bedingt durch den Aufbau eines zusätzlichen Übertragungspfades oder durch den Abbau eines bestehenden Übertragungspfades, ist ein zusätzlicher Signalisierungsaufwand in Form der Signalisierungsnachrichten erforderlich. Dafür brauchen aber keine zusätzlichen Informationen in den Übertragungsrahmen eingetragen zu werden, anhand derer der Übergangspunkt festgelegt werden kann.

Von Vorteil ist es, wenn als zentrale Steuereinrichtung eine Dienstesteuerungsstelle, die zur Abwicklung von Diensten in das Übertragungsnetz eingebunden wird, verwendet wird.

Gemäß einer Weiterbildung der Erfindung kann der Übergangspunkt in eine Funkeinrichtung oder in eine Vermittlungseinrichtung des universellen Übertragungsnetzes gelegt werden.

Die Erfindung wird anhand eines in Figuren dargestellten Ausführungsbeispiels erläutert. Im einzelnen zeigen
- Figur 1: zwei verschiedene redundante Übertragungspfade, die an einem Kombinationspunkt, der Übergangspunkt ist, im Übertragungsnetz zusammengeführt werden,
- Figur 2: drei redundante Übertragungspfade nach Aufbau eines zusätzlichen Übertragungspfades, der zu einer Änderung des Übergangspunkts im Übertragungsnetz führt,
- Figur 3: die Signalisierungsnachrichten im Übertragungsnetz bei Hinzufügen eines zusätzlichen Übertragungspfades und
- Figur 4: die Signalisierungsnachrichten im Übertragungsnetz bei Wegnahme eines bestehenden Übertragungspfades.

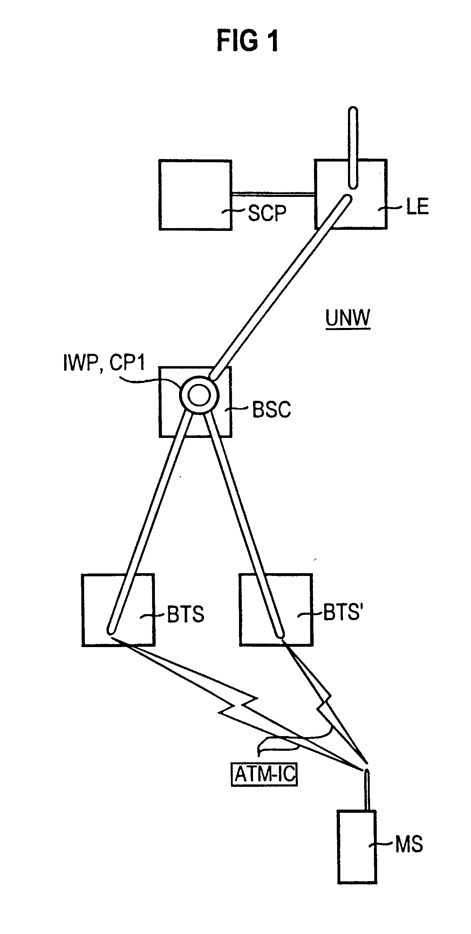

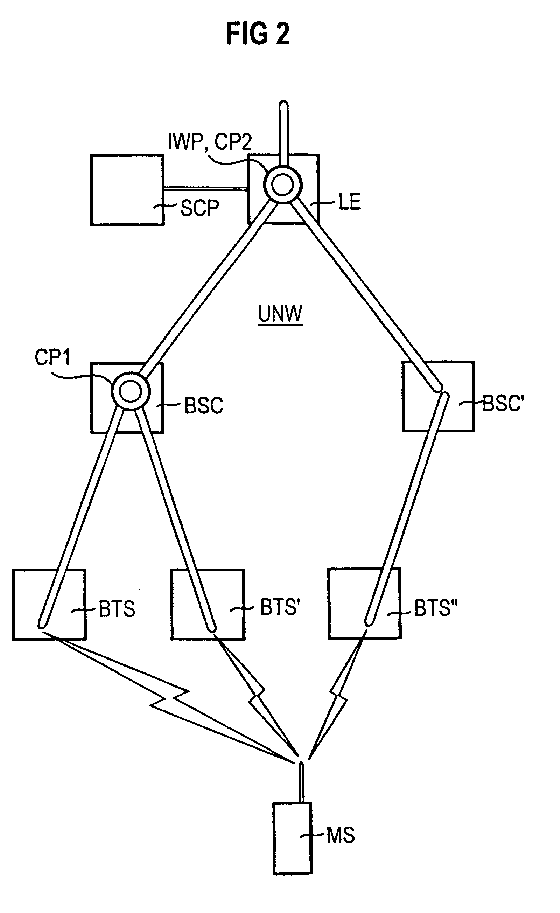

In den Figuren 1 und 2 sind jeweils in einem Blockschaltbild die Netzelemente eines universellen Übertragungsnetzes UNW dargestellt, in dem sowohl mobilfunknetzspezifisch kodierte Informationen als auch festnetzspezifisch kodierte Informationen zur personenbezogenen Mobilkommunikation zwischen Netzteilnehmern übertragen werden. Das universelle Übertragungsnetz UNW ermöglicht den Netzteilnehmern unterschiedlicher Zugangsnetze, wie beispielsweise Mobilfunknetz und Festnetz, eine personenbezogene mobile Kommunikation unabhängig vom jeweiligen Zugangsnetz. Im vorliegenden Beispiel weist das Übertragungsnetz UNW gemäß Figur 1 als Netzelemente mehrere Funkeinrichtungen BTS, BTS', mindestens eine Steuereinrichtung BSC und mindestens eine Vermittlungseinrichtung LE auf. Selbstverständlich sind weitere Netzelemente vorhanden, die für das Verständnis der Erfindung aber nicht erforderlich sind. Die Funkeinrichtungen BTS, BTS' empfangen die Informationen, die von einer Funkteilnehmerstation MS zum Netz gesendet werden, in der Aufwärtsübertragungsrichtung (Uplink) und senden die Informationen, die vom Übertragungsnetz (Downlink) empfangen werden, in der Abwärtsübertragungsrichtung jeweils über eine Funkübertragungsschnittstelle. Dabei bedient jede Funkeinrichtung BTS ... üblicherweise eine Funkzelle, die in einem zellular aufgebauten Netz den kleinsten Funkversorgungsbereich darstellt. Durch den Einsatz von Richtantennen an einem Standort der Funkeinrichtung BTS ... kann eine Funkzelle in zwei oder mehr sektorierte Zellen unterteilt werden, die vom Netz als gewöhnliche Funkzellen behandelt werden.

Die Steuereinrichtung BSC übernimmt die funktechnischen Steuerungsfunktionen im Übertragungsnetz, wie beispielsweise die Funkverarbeitungsfunktionen, die Verwaltung der Funkeinrichtungen, die Funkkanalverwaltung usw. Dabei bedient jede Steuereinrichtung BSC eine oder mehrere Funkeinrichtungen BTS, BTS'. An die Steuereinrichtung BSC ist die Vermittlungseinrichtung LE angeschlossen, die neben anderen Vermittlungseinrichtungen im Vermittlungssystem des Übertragungsnetzes angeordnet ist. Dabei übernimmt das Vermittlungssystem alle mobilfunknetzbezogenen und festnetzbezogenen Vermittlungs- , funktionen, die den Aufbau und Abbau von Anrufverbindungen, die Leitweglenkung (routing) im universellen Übertragungsnetz betreffen. Im vorliegenden Beispiel besteht die Vermittlungseinrichtung LE aus einer lokalen Vermittlungseinrichtung (Local Exchange), wie sie beispielsweise zur Vermittlung in lokal begrenzten Gebieten eines Festnetzes verwendet wird. Mit der Vermittlungseinrichtung LE ist eine Dienstedatenstelle SCP (Service Control Point) verbunden, die zur Abwicklung von Diensten für die Netzteilnehmer in das Übertragungsnetz eingebunden ist. Als intelligente zentrale Steuereinrichtung weist sie die Dienstelogik und die Daten zur Durchführung der Dienste auf.

Die Funkteilnehmerstation MS arbeitet in einem Übertragungsmodus, bei dem für eine logische Verbindung mehrere redundante Übertragungspfade zu den Funkeinrichtungen zu demselben Zeitpunkt parallel aufgebaut sind (Macro Diversity). Der Aufbau und Abbau von redundanten Übertragungspfaden kann durch das Netz in der Abwärtsübertragungsrichtung (downlink) oder von der Funkteilnehmerstation in der Aufwärtsübertragungsrichtung (uplink) erfolgen. Im vorliegenden Beispiel werden über die Funkübertragungsschnittstelle dieselben Informationen, die in einander entsprechenden Übertragungsrahmen eingetragen sind, von den Funkeinrichtungen BTS, BTS' auf zwei redundanten Übertragungspfaden parallel empfangen. Dabei enthalten die Informationen mobilfunknetzspezifisch kodierte Informationen, die sowohl Signalisierungsinformationen, als auch Sprach- und Dateninformationen sein können. Dadurch, daß von der Funkteilnehmerstation MS insgesamt m+1 Übertragungspfade parallel aufgebaut worden sind, sind insgesamt m Kombinationspunkte zur Kombination von jeweils zwei Übertragungspfaden im Übertragungsnetz erforderlich. Wegen der insgesamt m+1=2 redundanten Übertragungspfade werden im Übertragungsnetz an m=1 Kombinationspunkten CP1 jeweils die Informationen von zwei ankommenden Übertragungsrahmen zu Informationen in einem abgehenden Übertragungsrahmen zusammengefügt. Die Informationen, wieviele Kombinationspunkte notwendig sind und in welchen Netzelementen sie sich befinden, werden in der zentralen Steuereinrichtung SCP gespeichert und bei Bedarf von ihr bereitgestellt. Da die zentrale Steuereinrichtung SCP über alle Kombinationspunkte im Netz informiert ist, wird von ihr der Kombinationspunkt CP1, an dem die beiden letzten Übertragungspfade kombiniert werden, als Übergangspunkt IWP (Interworking Point) im Übertragungsnetz gewählt, an dem die in dem Übertragungsrahmen enthaltenen mobilfunknetzspezifisch kodierten Informationen in festnetzspezifisch kodierte Informationen umgesetzt werden.

Im vorliegenden Beispiel befinden sich die mobilfunknetzspezifisch kodierten Informationen in einem Übertragungsrahmen, der eine nach dem Asynchronen Transfermodus (Asynchronous Transfer Modus, ATM) gebildete Informationszelle ATM-IC ist. Bekanntlich weist jede ATM-Informationszelle ATM-IC ein Kopffeld (Header) der Länge 5 Byte und ein Informationsfeld (PayLoad) der Länge 48 Byte auf. Die mobilfunknetzspezifisch kodierten Informationen können auch in Informationsblöcken gemäß einem synchronen oder plesiochronen Transfermodus (SDH oder PDH) übertragen werden.

Figur 2 zeigt insgesamt drei redundante Übertragungspfade, von denen der gegenüber Figur 1 hinzukommende Pfad von der Funkteilnehmerstation MS hinzugefügt worden ist. Dies bedeutet, daß von der Funkteilnehmerstation MS zwei redundante Übertragungspfade zu den Funkeinrichtungen BTS und BTS' und ein dritter Übertragungspfad zu einer weiteren Funkeinrichtung BTS'' über die Funkübertragungsschnittstelle führt. Von den Funkeinrichtungen BTS und BTS' werden die beiden ankommenden Übertragungsrahmen mit den identischen Informationen auf zwei Übertragungspfaden zur Steuereinrichtung BSC weitergeleitet. Ebenso werden von der Funkeinrichtung BTS'' dieselben Informationen im entsprechenden Übertragungsrahmen zu einer weiteren Steuereinrichtung BSC' über den dritten Übertragungspfad gesendet. In der Steuereinrichtung BSC werden die auf den beiden Übertragungspfaden ankommenden identischen Informationen an dem Kombinationspunkt CP1 - wie bisher - zusammengeführt. Der Kombinationspunkt CP1 ist jedoch nicht mehr der Übergangspunkt, da durch den zusätzlich aufgebauten Übertragungspfad sich die Anzahl der Kombinationspunkte erhöht hat, so daß die letzten beiden Übertragungspfade nicht mehr an dem Kombinationspunkt CP1 zusammengeführt werden.

Die Informationen, die von der Steuereinrichtung BSC' auf dem dritten Übertragungspfad empfangen werden, werden unmittelbar zur Vermittlungseinrichtung LE weitergeleitet, ohne daß an einem Kombinationspunkt in der Steuereinrichtung BSC' eine Zusammenführung von redundanten Übertragungspfaden erforderlich ist. In der Vermittlungseinrichtung LE werden die beiden einzelnen Übertragungspfade, die von den Steuereinrichtungen BSC und BSC' aufgebaut wurden, an einem zweiten Kombinationspunkt CP2 kombiniert. Die in den beiden ankommenden Übertragungsrahmen enthaltenen Informationen werden wiederum zusammengeführt und in einen abgehenden Übertragungsrahmen eingetragen, der auf einem einzelnen Verbindungspfad von der Vermittlungseinrichtung LE ausgesendet wird. Der Kombinationspunkt CP2 in der Vermittlungseinrichtung LE bildet den neuen Übergangspunkt IWP, an dem die mobilfunknetzspezifisch kodierten Informationen in festnetzspezifisch kodierte Informationen zur Weiterverarbeitung in nächstfolgenden Netzelementen des Übertragungsnetzes umgesetzt werden. Dabei wird der neue Übergangspunkt IWP von der zentralen Steuereinrichtung SCP aufgefordert, die Umsetzung durchzuführen, während der bisherige Übergangspunkt, der Kombinationspunkt CP1, von der zentralen Steuereinrichtung SCP darüber informiert wird, daß die mobilfunknetzspezifisch kodierten Informationen nicht umzusetzen sind. Sie bleiben unverändert und werden im abgehenden Übertragungsrahmen zur Vermittlungseinrichtung LE ausgesendet. Der Informationsaustausch zwischen der zentralen Steuereinrichtung SCP und dem neuen Übergangspunkt sowie dem alten Übergangspunkt erfolgt durch entsprechende Signalisierungsnachrichten.

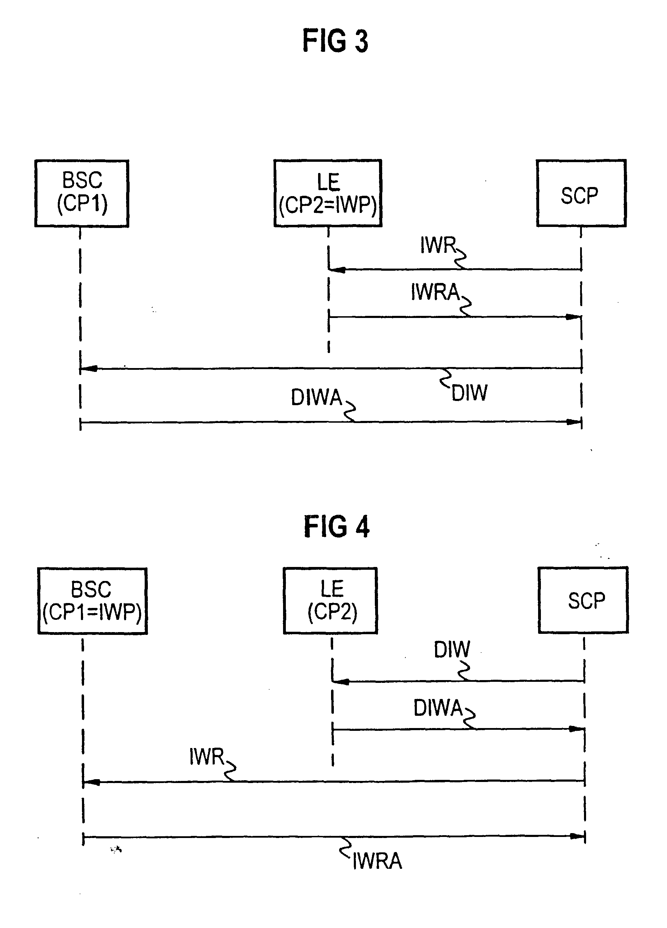

In Figur 3 ist der Signalisierungsfluß zwischen den Netzelementen bzw. Kombinationspunkten nach Hinzufügen eines weiteren Übertragungspfades - gemäß Figur 2 - dargestellt. Die zentrale Steuereinrichtung SCP sendet eine Signalisierungsnachricht IWR zur Vermittlungseinrichtung LE aus, in der der Kombinationspunkt CP2 als neuer Übergangspunkt IWP festgelegt wird. Die Signalisierungsnachricht IWR enthält die Aufforderung zur Umsetzung der im Übertragungsrahmen enthaltenen mobilfunknetzspezifisch kodierten Informationen. Die Vermittlungseinrichtung LE bestätigt den Empfang der Aufforderung zur Umsetzung in einer Signalisierungsnachricht IWRA, die in der Gegenrichtung zur zentralen Steuereinrichtung SCP rückgesendet wird. Die Steuereinrichtung BSC, in der der alte Übergangspunkt vom Kombinationspunkt CP1 gebildet wurde, der die Umsetzung bisher durchgeführt hat, wird von der zentralen Steuereinrichtung SCP in einer Signalisierungsnachricht DIW darüber informiert, die Umsetzung zu unterlassen. Auch die Steuereinrichtung BSC meldet den Empfang der Signalisierungsnachricht DIW durch Rücksenden einer Signalisierungsnachricht DIWA.

Nach Wegnahme eines redundanten Übertragungspfades in der Anordnung gemäß Figur 2 entsteht die Anordnung gemäß Figur 1, in der nur mehr die beiden redundanten Übertragungspfade an dem einzigen Kombinationspunkt, der auch den Übergangspunkt bildet, kombiniert werden. Figur 4 zeigt den Signalisierungsfluß zwischen den Netzelementen nach Abbau eines bestehenden Übertragungspfades. Die Signalisierungsnachricht DIW mit der Aufforderung, die Umsetzung nicht mehr auszuführen, und die Signalisierungsnachricht DIWA zur Bestätigung der Aufforderung werden zwischen der zentralen Steuereinrichtung SCP und der Vermittlungseinrichtung LE ausgetauscht, die den bisherigen Übergangspunkt (Kombinationspunkt CP2) enthielt. Die zentrale Steuereinrichtung SCP sendet die Signalisierungsnachricht IWR zur Steuereinrichtung BSC aus, die den einzigen Kombinationspunkt CP1 als neuen Übergangspunkt IWP aufweist. Die Signalisierungsnachricht IWR enthält die Aufforderung zur Umsetzung der im Übertragungsrahmen enthaltenen mobilfunknetzspezifisch kodierten Informationen. Nach Empfang der Aufforderung sendet die Steuereinrichtung BSC zur Bestätigung die Signalisierungsnachricht IWRA zur zentralen Steuereinrichtung SCP zurück.

## Patentansprüche

1. Verfahren zur Übertragung von Informationen in einem universellen Übertragungsnetz (UNW), in dem mobilfunknetzspezifische und festnetzspezifische Funktionen durchgeführt werden und in dem dieselben Informationen, die zwischen dem Übertragungsnetz (UNW) und einer Funkteilnehmerstation (MS) auf verschiedenen redundanten Übertragungspfaden, die über eine Funkübertragungsschnittstelle zum Übertragungsnetz parallel aufgebaut sind, in Übertragungsrahmen ausgesendet werden, an Kombinationspunkten (CP1, CP2) zusammengeführt werden, an denen in der einen Übertragungsrichtung jeweils zwei Übertragungspfade zu einem einzelnen Übertragungspfad kombiniert und in der anderen Übertragungsrichtung der einzelne Übertragungspfad in zwei Übertragungspfade aufgeteilt werden,
**dadurch gekennzeichnet,**
daß von einer zentralen Steuereinrichtung (SCP) im Übertragungsnetz, die über alle Kombinationspunkte (CP1, CP2) informiert ist, ein Kombinationspunkt (z.B. CP1), an dem die beiden letzten Übertragungspfade kombiniert oder der einzelne Übertragungpfad aufgeteilt werden, als einziger Übergangspunkt (IWP) im Übertragungsnetz gewählt wird, an dem in dem Übertragungsrahmen enthaltene mobilfunknetzspezifisch kodierte Informationen in festnetzspezifisch kodierte Informationen umgesetzt werden.

2. Verfahren nach Anspruch 1,
**dadurch gekennzeichnet,**
daß bei Änderung des Übergangspunkts (IWP), bedingt durch einen Aufbau eines zusätzlichen Übertragungspfades oder durch einen Abbau eines bestehenden Übertragungspfades, der Kombinationspunkt (z.B. CP2), der zu dem neuen Übergangspunkt wird, von der zentralen Steuereinrichtung (SCP) in einer Signalisierungsnachricht (IWR) aufgefordert wird, die Umsetzung durchzuführen.

3. Verfahren nach Anspruch 2,
**dadurch gekennzeichnet,**
daß der Kombinationspunkt (z.B. CP1), der die Umsetzung bisher durchgeführt hat, von der zentralen Steuereinrichtung (SCP) in einer Signalisierungsnachricht (DIW) aufgefordert wird, die Umsetzung zu unterlassen.

4. Verfahren nach einem der vorhergehenden Ansprüche,
**dadurch gekennzeichnet,**
daß als zentrale Steuereinrichtung (SCP) eine Dienstesteuerungsstelle, die zur Abwicklung von Diensten in das Übertragungsnetz eingebunden wird, verwendet wird.

5. Verfahren nach einem der vorhergehenden Ansprüche,
**dadurch gekennzeichnet,**
daß der Übergangspunkt (IWP) in eine Funkeinrichtung oder in eine Vermittlungseinrichtung des Übertragungsnetzes gelegt wird.

6. Verfahren nach einem der Ansprüche 1 bis 5,
**dadurch gekennzeichnet,**
daß in dem Übertragungsrahmen mobilfunkspezifisch kodierte Informationen übertragen werden, und daß als Übertragungsrahmen jeweils eine nach dem Asynchronen Transfermodus (ATM) zu übertragende Informationszelle (ATM-IC) verwendet wird.

7. Verfahren nach einem der Ansprüche 1 bis 5,
**dadurch gekennzeichnet,**
daß in dem Übertragungsrahmen mobilfunkspezifisch kodierte Informationen übertragen werden, und daß als Übertragungsrahmen jeweils ein nach einem synchronen Transfermodus zu übertragender Informationsblock verwendet wird.

## Claims

1. Method for transmitting information in a universal transmission network (UNW), in which functions specific to mobile radio networks and functions specific to fixed networks are carried out and in which the same information which is transmitted between the transmission network (UNW) and a radio subscriber station (MS) on different redundant transmission paths which are set up in parallel with the transmission network via the radio transmission interface is transmitted in transmission frames, is combined at combination points (CP1, CP2) at which two transmission paths are in each case combined to form a single transmission path in one transmission direction, and the single transmission path is split into two transmission paths in the other transmission direction,
characterized
in that a central control device (SCP) in the transmission network, which is informed of all the combination points (CP1, CP2), selects a combination point (for example CP1) at which the two last transmission paths are combined or the individual transmission path is split, as the single interworking point (IWP) in the transmission network at which information which is encoded specifically for the mobile radio network and is contained in the transmission frame is converted into information encoded specifically for fixed networks.

2. Method according to Claim 1,
characterized
in that, when the interworking point (IWP) is changed, and governed by the setting up of an additional transmission path or by the clearing of an existing transmission path, the combination point (for example CP2) which becomes the new interworking point is requested by the central control device (SCP) in a signalling message (IWR) to carry out the conversion.

3. Method according to Claim 2,
characterized
in that the combination point (for example CP1) which has carried out the conversion in the past is requested by the central control device (SCP) in a signalling message (DIW) to stop carrying out the conversion.

4. Method according to one of the preceding claims,
characterized
in that a service control point, which is included in the transmission network in order to handle services, is used as the central control device (SCP).

5. Method according to one of the preceding claims,
characterized
in that the interworking point (IWP) is located in a radio device or in an exchange in the transmission network.

6. Method according to one of Claims 1 to 5,
characterized
in that information encoded specifically for mobile radios is transmitted in the transmission frame, and in that an information cell (ATM-IC) which is to be transmitted using the asynchronous transfer mode (ATM) is in each case used as the transmission frame.

7. Method according to one of Claims 1 to 5,
characterized
in that information encoded specifically for mobile radios is transmitted in the transmission frame, and in that an information block to be transmitted using the synchronous transfer mode is in each case used as the transmission frame.

## Revendications

1. Procédé de transmission d'informations dans un réseau (UNW) universel de transmission, dans lequel sont exécutées des fonctions spécifiques au réseau mobile et des fonctions spécifiques au réseau fixe et dans lequel les mêmes informations qui sont émises dans des trames de transmission entre le réseau (UNW) de transmission et une station (MS) d'abonnés au service mobile sur diverses voies de transmission redondantes qui sont établies en parallèle par l'intermédiaire d'une interface de transmission de radiocommunication avec le réseau de transmission, sont réunies à des points (CP1, CP2) de combinaison auxquels, dans l'une des directions de transmission, il est combiné chaque fois deux voies de transmission en une voie de transmission individuelle et, dans l'autre direction de transmission, la voie de transmission individuelle est subdivisée en deux voies de transmission, caractérisé en ce qu'il est choisi par un dispositif (SCP) central de commande dans le réseau de transmission qui est informé de tous les points (CP1, CP2) de combinaison, un point (par exemple CP1) de combinaison auquel les deux dernières voies de transmission sont combinées ou auquel la voie de transmission individuelle est subdivisée, comme unique point (IWP) de transfert dans le réseau de transmission auquel des informations codées de manière spécifique au réseau mobile, contenues dans les trames de transmission, sont converties en informations codées de manière spécifique au réseau fixe.

2. Procédé suivant la revendication 1, caractérisé en ce que, en cas de changement du point (IWP) de transfert en raison d'un établissement d'une voie de transmission supplémentaire ou en raison d'une abolition d'une voie de transmission existante, le point (par exemple CP2) de combinaison qui devient le nouveau point de transfert est invité par le dispositif (SCP) central de commande dans un message (IWR) de signalisation à exécuter la conversion.

3. Procédé suivant la revendication 2, caractérisé en ce que le point (par exemple CP1) de combinaison qui a effectué la conversion jusqu'ici est invité par le dispositif (SCP) central de commande dans un message (DIW) de signalisation à abandonner la conversion.

4. Procédé suivant l'une des revendications précédentes, caractérisé en ce qu'il est utilisé comme dispositif (SCP) central de commande un point de commande de services qui est intégré au réseau de transmission pour traiter des services.

5. Procédé suivant l'une des revendications précédentes, caractérisé en ce que le point (IWP) de transfert est placé dans un dispositif de radiocommunication ou dans un dispositif de commutation du réseau de transmission.

6. Procédé suivant l'une des revendications 1 à 5, caractérisé en ce qu'il est transmis dans la trame de transmission des informations codées de manière spécifique au réseau mobile et en ce qu'il est utilisé comme trame de transmission chaque fois une cellule (ATM-IC) d'informations à transmettre suivant le mode de transfert asynchrone (ATM).

7. Procédé suivant l'une des revendications 1 à 5, caractérisé en ce qu'il est transmis dans la trame de transmission des informations codées de manière spécifique au réseau mobile et en ce qu'il est utilisé comme trame de transmission chaque fois un bloc d'informations à transmettre suivant un mode de transfert synchrone.
